# EUROPÄISCHE PATENTSCHRIFT

(11) **EP 3 791 159 B1**
(45) Veröffentlichungstag und Bekanntmachung des Hinweises auf die Patenterteilung: **04.09.2024**
(21) Anmeldenummer: 19720550.3
(22) Anmeldetag: 26.04.2019
(51) Int. Cl.: G01N 21/25, G01N 21/59, G01N 21/64, G01N 21/79

(54) **TRANSMISSIONSVORRICHTUNG ZUR UNTERSUCHUNG VON PROBEN IN KAVITÄTEN EINER MIKROTITERPLATTE UND VERFAHREN ZUM UNTERSUCHEN VON PROBEN IN KAVITÄTEN EINER MIKROTITERPLATTE MITTELS TRANSMISSION**
TRANSMISSION APPARATUS FOR EXAMINING SAMPLES IN CAVITIES OF A MICROTITER PLATE AND METHOD FOR EXAMINING SAMPLES IN CAVITIES OF A MICROTITER PLATE BY MEANS OF TRANSMISSION
DISPOSITIF DE TRANSMISSION DESTINÉ À L'ANALYSE D'ÉCHANTILLONS PLACÉS DANS DES PUITS D'UNE PLAQUE DE MICROTITRAGE ET PROCÉDÉ D'ANALYSE PAR TRANSMISSION D'ÉCHANTILLONS PLACÉS DANS DES PUITS D'UNE PLAQUE DE MICROTITRAGE

(30) Priorität: 08.05.2018 DE 102018111033
(43) Veröffentlichungstag der Anmeldung: 17.03.2021
(73) Patentinhaber: Byonoy GmbH, 22767 Hamburg (DE)
(72) Erfinder: NAZIRIZADEH, Yousef, 22765 Hamburg (DE); BEHRENDS, Volker, 22307 Hamburg (DE)
(74) Vertreter: Seemann & Partner Patentanwälte mbB
(86) Internationale Anmeldenummer: PCT/EP2019/060749
(87) Internationale Veröffentlichungsnummer: WO 2019/214971

(56) Entgegenhaltungen:
- EP-A1- 0 545 673
- WO-A1-2016/205736
- CN-A- 104 406 941
- US-A1- 2005 051 706
- US-A1- 2013 228 675
- US-A1- 2014 273 189
- US-A1- 2016 051 982
- US-A1- 2016 161 402
- US-A1- 2017 248 576

## Beschreibung

Die Erfindung betrifft eine Transmissionsvorrichtung zur Untersuchung von Proben in Kavitäten einer Mikrotiterplatte, umfassend eine Beleuchtungseinrichtung und eine Detektionseinrichtung, zwischen denen ein Zwischenraum ausgebildet ist, der dazu eingerichtet ist, eine Mikrotiterplatte aufzunehmen, wobei die Beleuchtungseinrichtung wenigstens eine Emissionsquelle aufweist, die zur Erzeugung von Emissionslicht ausgebildet ist.

Weiterhin betrifft die Erfindung ein Verfahren zum Untersuchen von Proben in Kavitäten einer Mikrotiterplatte mittels Transmission, wobei die Mikrotiterplatte in einem Zwischenraum zwischen einer Beleuchtungseinrichtung und einer Detektionseinrichtung angeordnet wird, wobei Emissionslicht während eines ersten Zeitraums in der Beleuchtungseinrichtung mittels einer Emissionsquelle erzeugt wird.

Zur einfachen Handhabung von Proben werden im medizinischen, biologischen und chemischen Bereich vielfach Mikrotiterplatten verwendet. Solche Mikrotiterplatten weisen eine Anzahl Näpfchen oder Kavitäten auf, in denen die Proben angeordnet werden. Um die Handhabung von Mikrotiterplatten zu vereinfachen, sind die Abmessungen der Mikrotiterplatten gemäß eines ANSI-Standards genormt. Es existieren verschiedene Formate der Mikrotiterplatten, die über eine unterschiedliche Anzahl von Kavitäten verfügen, beispielsweise zwölf, achtundvierzig, sechsundneunzig, dreihundertvierundachtzig und tausendfünfhundertsechsunddreißig.

Ein häufig eingesetztes Untersuchungsverfahren für Proben in Mikrotiterplatten sind Transmissionsuntersuchungen, bei denen Licht durch die Kavitäten und die darin enthaltenen Proben geleitet und das transmittierte Licht gemessen wird. Auf diese Weise lässt sich Aufschluss über Eigenschaften der Proben gewinnen. Beispielsweise kommt vielfach bei "Enzyme-Linked Immunosorbent Assay" (ELISA)-Untersuchungen ein Transmissionsverfahren zum Einsatz. Bei ELISA-Untersuchungen werden Antigene nachgewiesen, indem die Antigene über einen Erstantikörper absorptiv gebunden werden und ein Enzym-gekoppelter Zweitantikörper zu einer Reaktion eines Farbstoffsubstrats führt. Diese Reaktion des Farbstoffsubstrats lässt sich mit der ELISA-Untersuchung nachweisen.

Außer der Messung der Reaktion eines Farbstoffsubstrats kann beispielsweise auch eine Fluoreszenz gemessen werden, zu der es nach der Einstrahlung des Lichts kommt.

Vorrichtungen, mit denen Transmissionsuntersuchungen von Proben in Mikrotiterplatten durchgeführt werden, sind zumeist groß, teuer und aufwendig zu bedienen. Dies liegt darin begründet, dass in diesen Vorrichtungen häufig eine Mechanik zum Verfahren einer Emissionsquelle und des Detektors vorgesehen ist. Mit einer solchen Mechanik können alle Kavitäten der Mikrotiterplatte nacheinander angefahren und das transmittierte Licht aus den Kavitäten gemessen werden. Allerdings benötigt eine solche Mechanik zusätzlichen Bauraum und verursacht zusätzliche Kosten bei der Herstellung der Vorrichtung. Fehlfunktionen in der Mechanik führen zudem zu einem Ausfall der Vorrichtung.

Weiterhin sehen diese Vorrichtungen vielfach eine Abschirmung des Messraums vor, in dem die Mikrotiterplatte während der Messung angeordnet ist. Dadurch wird der Detektor vor dem Einfall von Streulicht geschützt. Nachteilig nimmt diese Abschirmung aber ebenfalls Bauraum in Anspruch, so dass diese Vorrichtungen entsprechend große Abmessungen aufweisen.

US 2016/0051982 A1 zeigt eine Halterung für Reaktionsbehälter und eine Moluküldetektionsvorrichtung.

In US 2013/0228675 A1 sind Multikanal Analyseinstrumente zum Einsatz mit Probenhaltern gezeigt.

US 2005/0051706 A1 zeigt eine Vorrichtung zum Befreien von photoaktivierbaren eingesperrten Komponenten.

EP 0 545 673 A1 zeigt ein Photometer zum Messen von Absorptionseigenschaften von Proben.

CN 104406941 A zeigt einen Detektor zum Testen von Lebensmitteln mittels Lichteinstrahlung.

Die Aufgabe der Erfindung besteht darin, eine Transmissionsvorrichtung zur Untersuchung von Proben in Kavitäten einer Mikrotiterplatte und Verfahren zum Untersuchen von Proben in Kavitäten einer Mikrotiterplatte mittels Transmission bereitzustellen, mit denen diese Untersuchungen einfach, kostengünstig und raumsparend durchgeführt werden können.

Diese Aufgabe wird gelöst durch eine Transmissionsvorrichtung zur Untersuchung von Proben in Kavitäten einer Mikrotiterplatte, umfassend eine Beleuchtungseinrichtung und eine Detektionseinrichtung, zwischen denen ein Zwischenraum ausgebildet ist, der dazu eingerichtet ist, eine Mikrotiterplatte aufzunehmen, wobei die Beleuchtungseinrichtung wenigstens eine Emissionsquelle aufweist, die zur Erzeugung von Emissionslicht ausgebildet ist, wobei die Transmissionsvorrichtung dadurch weitergebildet ist, dass die Beleuchtungseinrichtung dazu eingerichtet ist, das von der Emissionsquelle erzeugte Emissionslicht auf mehrere Teilstrahlengänge aufzuteilen, wobei mehrere der Teilstrahlengänge als Transmissionsstrahlengänge durch den Zwischenraum zu jeweils einer Detektoreinheit der Detektionseinrichtung verlaufen und wobei die Detektionseinrichtung dazu ausgebildet ist, entlang der Transmissionsstrahlengänge einfallende Lichtsignale mittels der Detektoreinheiten für jeden Transmissionsstrahlengang separat zu messen, wobei die Beleuchtungseinrichtung einen Lichtmischer umfasst, der dazu ausgebildet ist, das von der Emissionsquelle erzeugte Emissionslicht zu homogenisieren und mit gleichmäßiger Intensität auf die Teilstrahlengänge zu verteilen, wobei die Teilstrahlengänge in der Beleuchtungseinrichtung in jeweils einem Lichtleiter verlaufen, die mit ihren Eintrittsseiten gebündelt an dem Lichtmischer anliegen, wobei die Lichtleiter, in denen die Transmissionsstrahlengänge verlaufen, dazu eingerichtet sind, einen Anteil des Emissionslichts von dem Lichtmischer zu jeweils einer Emissionsöffnung der Beleuchtungseinrichtung zu leiten, wobei der Lichtmischer eine im wesentliche dreieckige Form aufweist, wobei eine Seite des Dreiecks zur Einkopplung des Emissionslichts vorgesehen ist und die zwei anderen Seiten in Ausbreitungsrichtung des Lichts zusammenlaufen.

Indem das Emissionslicht auf mehrere Teilstrahlengänge aufgeteilt wird, von denen mehrere als Transmissionsstrahlengänge durch den Zwischenraum zu jeweils einer Detektoreinheit der Detektionseinrichtung verlaufen, können vorteilhaft separat Proben in mehreren Kavitäten untersucht werden. Die Anzahl der Kavitäten, die auf diese Weise separat untersuchbar sind, entspricht der Anzahl der Transmissionsstrahlengänge.

Vorteilhaft können durch die Aufteilung mehrere Kavitäten mit einer einzelnen Emissionsquelle beleuchtet werden, ohne die Emissionsquelle verfahren zu müssen. Im Gegensatz zu einer Vorrichtung, bei der die Emissionsquelle und der Detektor mit einer Mechanik verfahren wird, wird durch die Aufteilung des Emissionslichts auf mehrere Transmissionsstrahlengänge eine kompakte und kostengünstige Ausgestaltung der Transmissionsvorrichtung realisiert.

Unter Lichtsignalen sind im Kontext dieser Patentanmeldung diejenigen Lichtstrahlen zu verstehen, die aus dem Zwischenraum zu den Detektoreinheiten gelangen. Dies umfasst vor allem diejenigen Lichtsignale, die auf eine Wechselwirkung des Emissionslichts mit den Proben zurückzuführen sind, beispielsweise auf Grund der Reaktion eines Farbstoffsubstrats oder durch Fluoreszenz. Weiterhin sind Lichtstrahlen des Streulichts umfasst, die von den Detektoreinheiten empfangen werden und von den Detektoreinheiten nachweisbar sind.

Für jeden Transmissionsstrahlengang wird separat mittels der Detektoreinheiten eine Transmissionsuntersuchung durchgeführt. Die Detektoreinheiten umfassen jeweils wenigstens einen Detektor. Beispielsweise umfassen die Detektoreinheiten jeweils mehrere Photodioden, die jeweils in unterschiedlichen Wellenlängenbereichen empfindlich sind, so dass Lichtsignale in verschiedenen Wellenlängen nachweisbar sind. Dadurch wird eine kompakte und gleichzeitig flexible Transmissionsvorrichtung bereitgestellt.

Vorzugsweise gelangt das transmittierte Licht ausschließlich durch den winkelabhängigen Filter und gegebenenfalls einer Linse zu dem wenigstens einen Detektor. Ein weiterer Lichtleiter ist somit in der Detektionseinrichtung unnötig, wodurch der ap-parative Aufwand deutlich verringert ist.

Vorzugsweise ist die Detektionseinrichtung dazu ausgebildet, die Lichtsignale für jeden Transmissionsstrahlengang simultan zu messen. Vorteilhaft wird durch eine simultane Messung der Lichtsignale aus mehreren Kavitäten einer Mikrotiterplatte die Dauer für eine Untersuchung der Proben reduziert.

Insbesondere ist für jede Kavität eines vorgebbaren Formats von Mikrotiterplatten jeweils ein Transmissionsstrahlengang vorgesehen. Gemäß einer Ausführungsform ist die Beleuchtungseinrichtung dazu eingerichtet, das von der Emissionsquelle erzeugte Emissionslicht auf wenigstens sechsundneunzig Teilstrahlengänge aufzuteilen, wobei sechsundneunzig der Teilstrahlengänge als Transmissionsstrahlengänge vorgesehen sind und wobei die Detektionseinrichtung sechsundneunzig Detektoreinheiten umfasst. Eine Transmissionsvorrichtung gemäß dieser Ausführungsform kann Proben in allen Kavitäten einer Mikrotiterplatte mit sechsundneunzig Kavitäten simultan untersuchen. Dadurch wird eine Transmissionsvorrichtung bereitgestellt, die raumsparend und kostengünstig ist und Untersuchungen mit geringem Zeitaufwand durchführt.

Es sind ebenfalls alternative Ausführungsformen der Transmissionsvorrichtung vorgesehen, die beispielsweise zur Untersuchung von Proben in einer Mikrotiterplatte mit sechs, zwölf, vierundzwanzig, achtundvierzig, dreihundertvierundachtzig oder eintausendfünfhundertsechsunddreißig Kavitäten ausgestaltet sind. Bei diesen Ausführungsformen entspricht jeweils die Zahl der Transmissionsstrahlengänge und der Detektoreinheiten der Anzahl der Kavitäten der Mikrotiterplatte.

Gemäß einer Ausführungsform sind alle Teilstrahlengänge Transmissionsstrahlengänge. Gemäß einer alternativen Ausführungsform ist wenigstens einer der Teilstrahlengänge ein Referenzstrahlengang, der dazu eingerichtet ist, das Emissionslicht zu einer Referenzdetektoreinheit, die in der Beleuchtungseinrichtung angeordnet ist, zu leiten. In dieser Ausführungsform sind somit nicht alle Teilstrahlengänge Transmissionsstrahlengänge, sondern wenigstens einer der Teilstrahlengänge ist ein Referenzstrahlengang. Mittels des Referenzdetektors lässt sich beispielsweise die Intensität des Emissionslichts messen, wodurch eine Alterung der Emissionsquelle und/oder eine Veränderung der Intensität des Emissionslichts nachweisbar sind.

Bevorzugt ist der Zwischenraum als rechteckförmige Öffnung in der Transmissionsvorrichtung ausgebildet, so dass die Transmissionsvorrichtung als offener Messaufbau ausgestaltet und die in den Zwischenraum einbringbare oder befindliche Mikrotiterplatte ohne die Notwendigkeit der Betätigung eines Verschlusselements zugänglich ist. Der Zwischenraum ist vorzugsweise im Wesentlichen formkomplementär zu der in den Zwischenraum einbringbaren oder befindlichen Mikrotiterplatte.

Unter einem offenen Messaufbau wird im Rahmen dieser Anmeldung verstanden, dass auf ein Verschlusselement, beispielsweise einer Verschlussklappe oder einem Shutter, für die rechteckförmige Öffnung verzichtet wird. Die Ausgestaltung der Transmissionsvorrichtung als offener Messaufbau erlaubt vorteilhafterweise eine raumsparende Bauweise. Da einfallendes Streulicht durch den winkelabhängigen Filter blockiert wird, ist ein Verschlusselement überflüssig. Weiterhin ist durch den offenen Messaufbau eine Mikrotiterplatte jederzeit einführbar und jederzeit entnehmbar, wodurch eine schnelle und einfache Handhabung der Transmissionsvorrichtung erreicht wird. Der Zwischenraum ist so ausgestaltet, dass eine Mikrotiterplatte passgenau aufnehmbar ist, so dass die Abmessungen der Transmissionsvorrichtung klein gehalten werden.

Vorzugsweise umfasst die Detektionseinrichtung einen winkelabhängigen Filter, der zwischen der Beleuchtungseinrichtung und dem wenigstens einen Detektor in den Transmissionsstrahlengängen angeordnet ist und im Wesentlichen nur solche Lichtstrahlen durchlässt, deren Einfallswinkel zu den Transmissionsstrahlengängen kleiner als ein vorgebbarer Grenzwinkel sind. Durch den winkelabhängigen Filter wird vorteilhaft erreicht, dass Streulicht, das für gewöhnlich schräg in den Messaufbau einfällt, herausgefiltert wird. Auf diese Weise wird die Qualität der Untersuchung erhöht. Als winkelabhängiger Filter kann beispielsweise ein Blickschutzfilter mit zueinander parallelen Lamellen oder ein Interferenzfilter eingesetzt werden. Vorzugsweise ist der winkelabhängige Filter als Folie ausgebildet.

Vorzugsweise ist der winkelabhängige Filter ein Bauteil der Detektionseinrichtung, das insbesondere den Zwischenraum abschließt oder zu einer Seite definiert.

Weiterhin umfasst die Beleuchtungseinrichtung einen Lichtmischer, der dazu ausgebildet ist, das von der Emissionsquelle erzeugte Emissionslicht zu homogenisieren und mit gleichmäßiger Intensität auf die Teilstrahlengänge zu verteilen, wobei insbesondere der Lichtmischer einen rechteckigen Querschnitt aufweist.

Der Lichtmischer ist beispielsweise ein längserstreckter Körper mit rechteckigem Querschnitt, in dem das Emissionslicht der Emissionsquelle homogenisiert wird. Dadurch wird erreicht, dass die Intensität des Emissionslichts in jedem Teilstrahlengang gleich ist und es zu keiner Verfälschung der Untersuchung durch unterschiedliche Intensitäten kommt.

Die Teilstrahlengänge verlaufen in der Beleuchtungseinrichtung in jeweils einem Lichtleiter, die mit ihren Eintrittsseiten gebündelt an dem Lichtmischer anliegen, wobei die Lichtleiter, in denen die Transmissionsstrahlengänge verlaufen, dazu eingerichtet sind, einen Anteil des Emissionslichts von dem Lichtmischer zu jeweils einer Emissionsöffnung der Beleuchtungseinrichtung zu leiten, wobei insbesondere die Emissionsöffnungen als Aussparungen in einer Halteplatte ausgebildet sind, wobei insbesondere in den Emissionsöffnungen Kugellinsen angeordnet sind.

Bevorzugt sind die Lichtleiter flexible Kabel, wie beispielsweise Glasfaserkabel oder polymere optische Fasern. Diese Lichtleiter liegen an ihrer Eintrittsseite gebündelt an dem Lichtmischer an, so dass das Emissionslicht gleichmäßig auf alle Lichtleiter übertragen wird. Die Austrittsseiten der Lichtleiter der Transmissionsstrahlengänge liegen an den Emissionsöffnungen an. Diese Emissionsöffnungen sind vorzugsweise zentral oberhalb der Kavitäten angeordnet, so dass das Emissionslicht durch die Lichtleiter geleitet wird und aus den Emissionsöffnungen in die Kavitäten eintritt. Zur Fokussierung des Emissionslichts sind vorzugsweise in den Emissionsöffnungen Kugellinsen vorgesehen.

Weiterhin umfasst die Emissionsquelle bevorzugt wenigstens zwei, insbesondere wenigstens drei, insbesondere wenigstens vier Leuchtdioden, wobei das Emissionslicht der Leuchtdioden im Lichtmischer zusammengeführt wird, wobei zwischen wenigstens einer der Leuchtdioden und dem Lichtmischer ein Interferenzfilter angeordnet ist, wobei insbesondere eine Kugellinse vor und insbesondere eine weitere Kugellinse hinter dem Interferenzfilter angeordnet sind, wobei insbesondere eine erste Leuchtdiode zur Emission von Emissionslicht mit einer Wellenlänge von 405 nm, eine zweite Leuchtdiode zur Emission von Emissionslicht mit einer Wellenlänge von 450 nm, eine dritte Leuchtdiode zur Emission von Emissionslicht mit einer Wellenlänge von 540 nm und eine vierte Leuchtdiode zur Emission von Emissionslicht mit einer Wellenlänge von 630 nm eingerichtet ist.

Durch die Interferenzfilter werden die Spektren der Wellenlängen des Emissionslichts der Leuchtdioden begrenzt, so dass die Emissionsspektren jeweils schmalbandig sind. Durch die Kugellinsen, die zwischen den Leuchtdioden und den Interferenzfiltern angeordnet sind, wird das Emissionslicht vor dem Eintritt in die Interferenzfilter parallelisiert. Die zwischen den Interferenzfiltern und dem Lichtmischer angeordneten Kugellinsen koppeln das Licht in dem Lichtmischer ein.

Durch die Verwendung von vier Leuchtdioden, die bevorzugt über unterschiedliche Wellenlängen ihres Emissionslichts verfügen, können mit der Transmissionsvorrichtung unterschiedliche Untersuchungen an den Proben in der Mikrotiterplatte durchgeführt werden, ohne dass dafür eine weitere Transmissionsvorrichtung benötigt oder die Leuchtdioden ausgetauscht werden müssten.

Bevorzugt sind die Leuchtdioden horizontal nebeneinander angeordnet. Der Lichtmischer weist bevorzugt für jede Leuchtdiode einen separaten Arm auf, die in Ausbreitungsrichtung des Lichts zusammenlaufen. Die Grundfläche des Lichtmischers weist eine im Wesentlichen dreieckige Form auf, wobei eine Seite des Dreiecks zur Einkopplung des Emissionslichts vorgesehen ist und die zwei anderen Seiten in Ausbreitungsrichtung des Lichts zusammenlaufen.

Weiterhin bevorzugt umfasst die Transmissionsvorrichtung Statusleuchten, die an der Außenseite der Transmissionsvorrichtung angeordnet sind und leuchten, wenn die Leuchtdioden Licht emittieren. Insbesondere wird ein Anteil des Emissionslichts jeder Leuchtdiode zur Beleuchtung von jeweils einer Statusleuchte verwendet.

Die Aufgabe wird weiterhin gelöst durch ein Verfahren zum Untersuchen von Proben in Kavitäten einer Mikrotiterplatte mittels Transmission, wobei die Mikrotiterplatte in einem Zwischenraum zwischen einer Beleuchtungseinrichtung und einer Detektionseinrichtung angeordnet wird, wobei Emissionslicht während eines ersten Zeitraums in der Beleuchtungseinrichtung mittels einer Emissionsquelle erzeugt wird, das dadurch weitergebildet ist, dass das Emissionslicht in der Beleuchtungseinrichtung auf mehrere Teilstrahlengänge aufgeteilt wird, wobei mehrere der Teilstrahlengänge als Transmissionsstrahlengänge durch jeweils eine Kavität der Mikrotiterplatte zu jeweils einer Detektoreinheit der Detektionseinrichtung verlaufen und wobei während des ersten Zeitraums entlang der Transmissionsstrahlengänge einfallende Lichtsignale mittels der Detektoreinheiten für jeden Transmissionsstrahlengang separat gemessen werden, wobei die Beleuchtungseinrichtung einen Lichtmischer umfasst, der das von der Emissionsquelle erzeugte Emissionslicht homogenisiert und mit gleichmäßiger Intensität auf die Teilstrahlengänge verteilt, wobei die Teilstrahlengänge in der Beleuchtungseinrichtung in jeweils einem Lichtleiter verlaufen, die mit ihren Eintrittsseiten gebündelt an dem Lichtmischer anliegen, wobei die Lichtleiter, in denen die Transmissionsstrahlengänge verlaufen, einen Anteil des Emissionslichts von dem Lichtmischer zu jeweils einer Emissionsöffnung der Beleuchtungseinrichtung leiten, wobei der Lichtmischer (24) eine im wesentliche dreieckige Form aufweist, wobei eine Seite des Dreiecks zur Einkopplung des Emissionslichts vorgesehen ist und die zwei anderen Seiten in Ausbreitungsrichtung des Lichts zusammenlaufen.

Auf das Verfahren treffen gleiche oder ähnliche Vorteile zu, wie sie bereits zuvor im Hinblick auf die Transmissionsvorrichtung zur Untersuchung von Proben in Kavitäten einer Mikrotiterplatte erwähnt wurden.

Vorzugsweise verläuft durch jede Kavität der Mikrotiterplatte ein Transmissionsstrahlengang, wobei die Lichtsignale für jeden Transmissionsstrahlengang simultan gemessen werden. Somit werden die Lichtsignale für jede Kavität der Mikrotiterplatte separat und simultan gemessen, wodurch das Verfahren mit geringem Zeitaufwand durchführbar ist. Eine Mechanik zum Verfahren der Emissionsquelle oder eines Detektors ist damit überflüssig.

Gemäß einer Ausführungsform wird das Emissionslicht in der Beleuchtungseinrichtung auf wenigstens sechsundneunzig Teilstrahlengänge aufgeteilt, wobei sechsundneunzig der Teilstrahlengänge als Transmissionsstrahlengänge vorgesehen sind und wobei während des ersten Zeitraums entlang der Transmissionsstrahlengänge einfallende Lichtsignale mittels sechsundneunzig Detektoreinheiten für jeden Transmissionsstrahlengang separat gemessen werden. Das Verfahren ist besonders vorteilhaft, wenn Proben in einer Mikrotiterplatte mit einer hohen Anzahl von Kavitäten, wie beispielsweise sechsundneunzig, dreihundertvierundachtzig oder eintausendfünfhundertsechsunddreißig, untersucht werden sollen, da durch die Aufteilung des Emissionslichts der Zeitaufwand besonders stark reduziert wird.

Weiterhin wird vorzugsweise eine Alterung der Emissionsquelle und/oder eine Veränderung der Wellenlängen der Intensität des Emissionslichts der Emissionsquelle mittels einer Referenzmessung gemessen, wobei das Emissionslicht über einen Referenzstrahlengang zu einer Referenzdetektoreinheit geleitet wird, die in der Beleuchtungseinrichtung angeordnet ist und die Intensität des Emissionslichts erfasst, wobei die Intensität des Emissionslichts mit zuvor gemessenen und/oder vorgegebenen Werten für die Intensität des Emissionslichts verglichen wird. Eine solche Referenzmessung kann beispielsweise vor und/oder nach der Untersuchung der Proben durchgeführt werden, um die Alterung der Leuchtdioden zu überwachen und die Qualität der Untersuchung zu überprüfen. Zusätzlich zu der Intensität des Emissionslichts können mittels der Referenzdetektoreinheit weitere Eigenschaften des Emissionslichts untersucht werden, beispielsweise, ob sich eine mittlere Wellenlänge des Emissionslichts einer Leuchtdiode verändert hat.

Die Untersuchung wird bevorzugt mit einem offenen Messaufbau durchgeführt.

Weiterhin stellen vorzugsweise die während des ersten Zeitraums gemessenen Lichtsignale eine Lichtmessung dar, wobei während eines zweiten Zeitraums kein Emissionslicht durch die Kavitäten geleitet wird und die während des zweiten Zeitraums gemessenen Lichtsignale eine Dunkelmessung darstellen, wobei für jede Detektoreinheit separat jeweils eine Lichtmessung und jeweils eine Dunkelmessung durchgeführt wird, wobei für jede Detektoreinheit die Dunkelmessung von der Lichtmessung subtrahiert wird. Mit anderen Worten wird während des ersten Zeitraums für jede Detektoreinheit eine Lichtmessung und während des zweiten Zeitraums für jede Detektoreinheit eine Dunkelmessung durchgeführt. Die Mikrotiterplatte ist sowohl während des ersten Zeitraums als auch während des zweiten Zeitraums in dem Zwischenraum angeordnet. Da während des zweiten Zeitraums kein Emissionslicht durch die Kavitäten geleitet wird, entsprechen die während des zweiten Zeitraums gemessenen Lichtsignale einem Hintergrund, der beispielsweise durch Streulicht verursacht wird. Durch Subtrahieren der Dunkelmessung von der Lichtmessung wird somit vorteilhaft der Hintergrund aus den Messungen entfernt und die Qualität der Untersuchungen erhöht. Vorzugsweise sind der erste Zeitraum und der zweite Zeitraum gleich lang. Auf diese Weise kann die Dunkelmessung ohne weitere Umrechnung von der Lichtmessung subtrahiert werden.

Indem die Lichtmessung und die Dunkelmessung für jede Detektoreinheit separat gemessen werden, werden unterschiedliche Streulichtintensitäten am Ort der Detektoreinheiten berücksichtigt. Dadurch kann beispielsweise ausgeglichen werden, dass Detektoreinheiten, die dichter an der Öffnung der Transmissionsvorrichtung angeordnet sind, verstärkt Streulichteinfall ausgesetzt sind.

Weiterhin werden bevorzugt mehrere Messzyklen durchlaufen, wobei in jedem Messzyklus wenigstens eine Lichtmessung und wenigstens eine Dunkelmessung gemessen werden und von jeder in einem Messzyklus gemessenen Lichtmessung eine im selben Messzyklus von derselben Detektoreinheit gemessene Dunkelmessung subtrahiert wird. Beispielsweise besteht ein Messzyklus aus einer einzelnen Lichtmessung und einer einzelnen Dunkelmessung für jede Detektoreinheit, wobei der erste Zeitraum und der zweite Zeitraum jeweils 5 ms betragen. Dieser Messzyklus wird vielfach wiederholt, wobei jeweils das in einem Messzyklus gemessene Dunkelsignal von dem im selben Messzyklus von derselben Detektoreinheit gemessenen Lichtsignal subtrahiert wird. Auf diese Weise ist es möglich, den Einfluss von sich verändernden Streulichtverhältnissen auszugleichen, beispielsweise durch eine flackernde Zimmerbeleuchtung, eine Veränderung der Helligkeit des einfallenden Tageslichts, den Schatten einer vorbeilaufenden Person oder ähnliches. Vorzugsweise ist die Zeitdauer eines Messzyklus möglichst klein, insbesondere zwischen 5 ms und 50 ms, so dass auch hochfrequente Änderungen des Streulichteinfalls bei der Messung berücksichtig werden können.

Gemäß einer weiteren bevorzugten Ausführungsform wird Emissionslicht mit wenigstens zwei, insbesondere wenigstens drei, insbesondere wenigstens vier unterschiedlichen Wellenlängen mittels jeweils einer Leuchtdiode der Emissionsquelle erzeugt, wobei die Bandbreite des Emissionslichts jeder Leuchtdiode mittels jeweils einem Interferenzfilter beschränkt wird, wobei insbesondere eine erste Leuchtdiode Emissionslicht mit einer Wellenlänge von 405 nm, eine zweite Leuchtdiode Emissionslicht mit einer Wellenlänge von 450 nm, eine dritte Leuchtdiode Emissionslicht mit einer Wellenlänge von 540 nm und eine vierte Leuchtdiode Emissionslicht mit einer Wellenlänge von 630 nm emittiert. Die Untersuchung der Proben erfolgt bevorzugt für jede Wellenlänge sequentiell.

Beispielsweise ist es vorgesehen, dass zuerst eine Lichtmessung mit einer ersten Wellenlänge gemessen wird, anschließend eine Dunkelmessung durchgeführt wird. Dies wird für jede Wellenlänge wiederholt, so dass bei vier Wellenlängen insgesamt acht Messungen durchgeführt werden, die zusammen einen Messzyklus bilden. Ebenso ist es möglich, dass nacheinander jeweils die Lichtmessungen mit unterschiedlichen Wellenlängen vorgenommen werden und anschließend eine einzelne Dunkelmessung vorgenommen wird, so dass die vier Lichtmessungen und die Dunkelmessung einen Messzyklus bilden. Alternativ ist es vorgesehen, dass zunächst ein Messzyklus mit der ersten Wellenlänge und einer Dunkelmessung vielfach wiederholt wird und anschließend die Messzyklen mit den weiteren Wellenlängen und jeweils einer Dunkelmessung vielfach wiederholt werden. Vorteilhaft wird mit all diesen Methoden die Untersuchung der wenigstens einen Probe mit unterschiedlichen Wellenlängen durchgeführt, wobei gleichzeitig der Einfluss von Streulicht auf die Untersuchung minimiert wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Transmissionsvorrichtung zur Untersuchung wenigstens einer Probe in einer Mikrotiterplatte,
- Fig. 2: eine schematische Darstellung einer Mikrotiterplatte mit sechsundneunzig Kavitäten,
- Fig. 3: eine schematische Darstellung einer Beleuchtungseinrichtung,
- Fig. 4: eine schematische Darstellung des inneren Aufbaus einer Beleuchtungseinrichtung umfassend eine Emissionsquelle,
- Fig. 5: die Darstellung aus Fig. 4 mit zusätzlich dargestellten Lichtleitern,
- Fig. 6: eine schematische Darstellung einer Detektionseinrichtung,
- Fig. 7: eine Explosionsdarstellung einer Detektionseinrichtung,
- Fig. 8a bis 8c: verschiedene Messzyklen für ein Verfahren zum Untersuchen von Proben in Kavitäten einer Mikrotiterplatte mittels Transmission.

In den Zeichnungen sind jeweils gleiche oder gleichartige Elemente und/oder Teile mit denselben Bezugsziffern versehen, so dass von einer erneuten Vorstellung jeweils abgesehen wird.

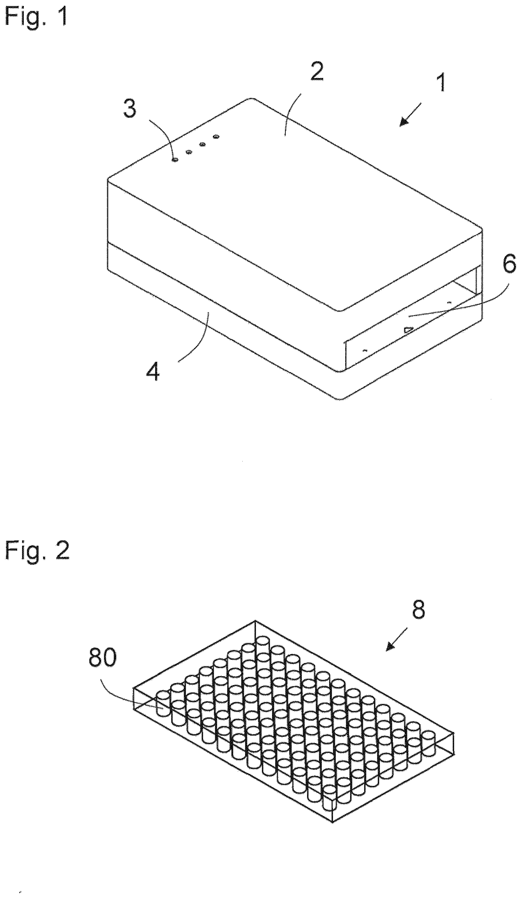

Fig. 1 zeigt schematisch eine beispielhafte Ausgestaltung einer Transmissionsvorrichtung 1. Die Transmissionsvorrichtung 1 umfasst eine Beleuchtungseinrichtung 2 und eine Detektionseinrichtung 4, zwischen denen sich ein als rechteckige Öffnung ausgebildeter Zwischenraum 6 befindet. Der Zwischenraum 6 ist so ausgestaltet, dass eine Mikrotiterplatte 8, wie sie in Fig. 2 dargestellt ist, passgenau eingeschoben werden kann. Die Abmessung des Zwischenraums 6 entsprechen also im Wesentlichen den Abmessungen der Mikrotiterplatte 8, wodurch die Transmissionsvorrichtung 1 einen kompakten Aufbau aufweist. Weiterhin umfasst die Transmissionsvorrichtung 1 mehrere Statusleuchten 3. Diese Statusleuchten 3 sind jeweils einer in der Beleuchtungseinrichtung 2 angeordneten Leuchtdiode zugeordnet, die in Fig. 1 verdeckt sind. Emittiert eine der Leuchtdioden Licht, so leuchtet auch die zugeordnete Statusleuchte 3. Aus Gründen der Übersichtlichkeit ist nur eine der Statusleuchten 3 mit einem Bezugszeichen versehen.

Bei der in Fig. 2 beispielhaft dargestellten Mikrotiterplatte 8 handelt es sich um ein Format mit sechsundneunzig Kavitäten 80, von denen wiederum nur eine Kavität 80 mit einem Bezugszeichen versehen ist. In diesen Kavitäten 80 werden die zu untersuchenden Proben angeordnet, bevor die Mikrotiterplatte 8 in den Zwischenraum 6 eingeschoben wird. Da die Abmessungen von Mikrotiterplatten 8 einem ANSI-Standard genügen, kann der Zwischenraum 6 formkomplementär zu diesen Abmessungen ausgestaltet werden.

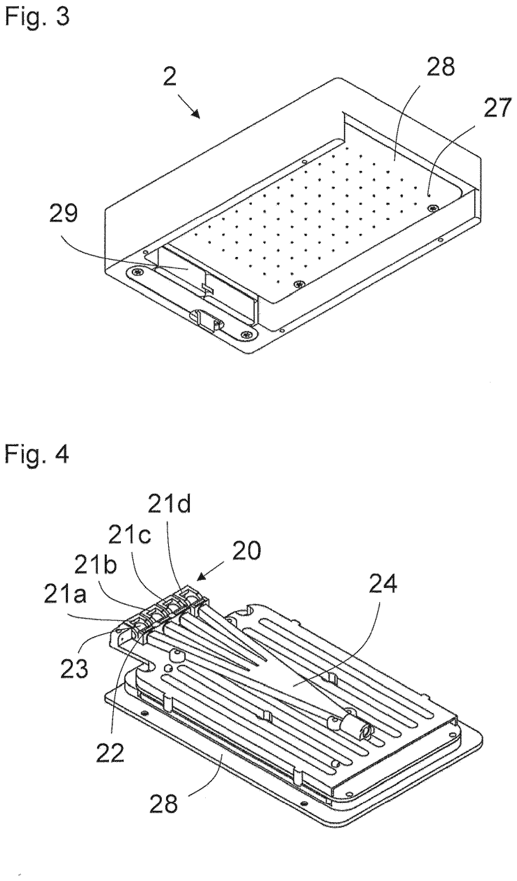

Fig. 3 zeigt eine schematische Darstellung der Beleuchtungseinrichtung 2, wobei in Fig. 3 eine Darstellung aus einem Blickwinkel von schräg unten gewählt wurde. Die Beleuchtungseinrichtung 2 weist eine Auswurfvorrichtung 29 auf, mit der die Mikrotiterplatte 8 schnell und einfach aus dem Zwischenraum 6 ausgeworfen werden kann. Direkt oberhalb der eingeschobenen Mikrotiterplatte 8 ist eine Halteplatte 28 angeordnet, die eine Anzahl von Emissionsöffnungen 27 aufweist, von denen nur eine mit einem Bezugszeichen versehen ist. Die Zahl der Emissionsöffnungen 27 entspricht der Zahl der Kavitäten 80 der Mikrotiterplatte 8. In dem in Fig. 3 gezeigten Beispiel sind also sechsundneunzig Emissionsöffnungen 27 vorhanden. Die Emissionsöffnungen 27 sind so angeordnet, dass im eingeschobenen Zustand der Mikrotiterplatte 8 jede Emissionsöffnung 27 zentral über einer Kavität 80 angeordnet ist.

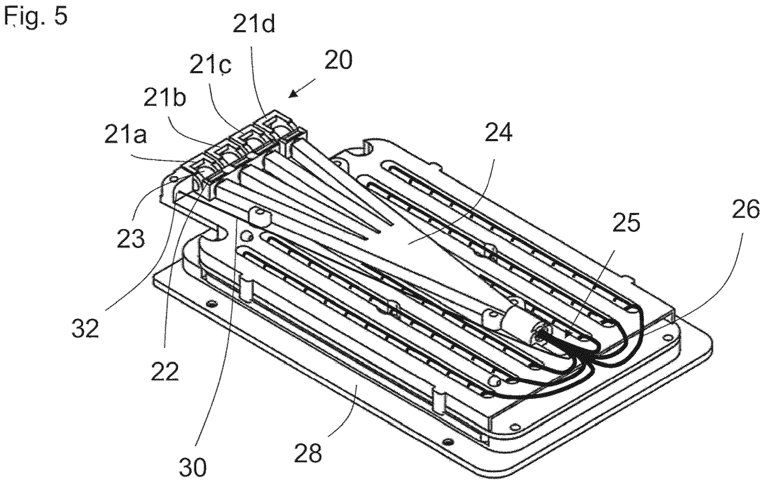

Der innere Aufbau der Beleuchtungseinrichtung 2 ist in den Fig. 4 und 5 dargestellt. Die in den Fig. 4 und 5 gewählte Ansicht entspricht der Ansicht in Fig. 1, so dass die in Fig. 4 und 5 verdeckte Unterseite der Halteplatte 28 der in Fig. 3 gezeigten Unterseite der Halteplatte 28 entspricht. Die Beleuchtungseinrichtung 2 weist eine Emissionsquelle 20 auf, die in dem in Fig. 4 gezeigten Beispiel vier Leuchtdioden 21a, 21b, 21c, 21d umfasst. Beispielsweise hat das Emissionslicht der Leuchtdiode 21a eine Wellenlänge von 405 nm, das Emissionslicht der Leuchtdiode 21b eine Wellenlänge von 450 nm, das Emissionslicht der Leuchtdiode 21c eine Wellenlänge von 540 nm und das Emissionslicht der Leuchtdiode 21d eine Wellenlänge von 630 nm. Das Vorsehen von mehreren Leuchtdioden mit unterschiedlichen Wellenlängen ermöglicht es, verschiedene Untersuchungen mit derselben Transmissionsvorrichtung 1 durchzuführen. Direkt hinter den Leuchtdioden 21a bis 21d ist jeweils eine Kugellinse 23 angeordnet, die das austretende Emissionslicht parallelisiert. Aus Gründen der Übersichtlichkeit ist wiederum nur eine der Kugellinsen 23 mit einem Bezugszeichen versehen. Hinter jeder Kugellinse 23 ist jeweils ein Interferenzfilter 22 angeordnet, der das Wellenlängenspektrum des Emissionslichts der Leuchtdioden 21a bis 21d einschränkt. Gemäß einer weiteren, nicht in Fig. 4 gezeigten Ausführungsform, ist hinter jedem Interferenzfilter 22 eine weitere Kugellinse angeordnet, die das Emissionslicht fokussiert.

Hinter den Interferenzfiltern 22 bzw. den weiteren Kugellinsen ist ein Lichtmischer 24 angeordnet. Dieser Lichtmischer 24 homogenisiert das einfallende Emissionslicht, so dass es sich mit einer gleichmäßigen Intensität im Querschnitt des Lichtmischers 24 verteilt. Dazu weist der Lichtmischer 24 gemäß der in Fig. 4 gezeigten Ausführungsform vorteilhafterweise einen rechteckigen Querschnitt auf. Ist nur eine einzelne Leuchtdiode 21a vorgesehen, so hat der Lichtmischer 24 beispielsweise die Form eines Stabes mit rechteckigem Querschnitt. Sind hingegen mehrere Leuchtdioden 21a bis 21d vorgesehen, wie in Fig. 4 gezeigt, so führt der Lichtmischer 24 das Emissionslicht der Leuchtdioden 21a bis 21d zusammen. Dies kann beispielsweise, wie in Fig. 4 gezeigt, mittels vier zusammenlaufenden Armen geschehen. Alternativ kann der Lichtmischer 24 eine im Wesentlichen dreieckige Grundfläche aufweisen, bei der im Vergleich zu der in Fig. 4 gezeigten Ausführungsform die Fläche zwischen den Armen ausgefüllt ist.

Fig. 5 zeigt eine vergrößerte Darstellung aus Fig. 4. Zudem sind Teilstrahlengänge 25 schematisch dargestellt, auf die das aus dem Lichtleiter 24 austretende Emissionslicht der Leuchtdioden 21a bis 21d aufgeteilt wird. Dazu ist am Ausgang des Lichtmischers 24 ein Bündel von Lichtleitern 26 angeordnet, in die jeweils ein Anteil des Emissionslichts gleichmäßig eingekoppelt wird. Von dem Ausgang des Lichtmischers 24 führen diese Lichtleiter 26 jeweils zu einer Emissionsöffnung 27, in denen zur weiteren Fokussierung des Emissionslichts jeweils eine nicht gezeigte Kugellinse angeordnet ist. Diejenigen Teilstrahlengänge 25, die in den Lichtleitern 26 zu den Emissionsöffnungen 27 verlaufen, sind Transmissionsstrahlengänge. Ein weiterer Lichtleiter 26 führt als Referenzstrahlengang 30 zurück zu einer Referenzdetektoreinheit 32, die neben den Leuchtdioden 21a bis 21d angeordnet ist. Mithilfe dieser Referenzdetektoreinheit 32 lässt sich die Alterung der Leuchtdioden 21a bis 21d und/oder eine Veränderung der Intensität des Emissionslichts untersuchen.

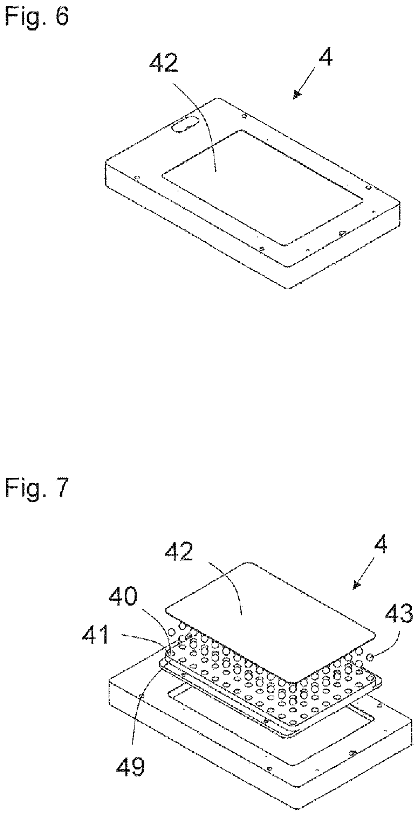

In Fig. 6 ist schematisch eine Detektionseinrichtung 4 dargestellt, die unterhalb der Beleuchtungseinrichtung 2 und der eingeschobenen Mikrotiterplatte 8 angeordnet ist. In einem Bereich der Oberfläche der Detektionseinrichtung 4, der im Wesentlichen der Fläche der eingeschobenen Mikrotiterplatte 8 entspricht, weist die Detektionseinrichtung 4 einen winkelabhängigen Filter 42 auf, der in der Darstellung in Fig. 6 als Folie ausgestaltet ist. Dieser winkelabhängige Filter 42 ist so ausgebildet, dass er im Wesentlichen nur solche Lichtstrahlen durchlässt, deren Einfallswinkel kleiner als ein vorgebbarer Grenzwinkel sind. Der Grenzwinkel wird bezogen auf die Transmissionsstrahlengänge des Emissionslichts in dem Zwischenraum 6, was einer Senkrechten auf dem winkelabhängigen Filter 42 entspricht. Auf diese Weise wird verhindert, dass Streulicht, welches schräg in den Zwischenraum 6 einfällt, den winkelabhängigen Filter 42 passieren kann, so dass nur die Lichtsignale der Proben aus dem Zwischenraum 6 hindurchgelangt.

Fig. 7 zeigt eine Explosionsdarstellung der Detektionseinrichtung 4 aus Fig. 6. In Fig. 7 ist dargestellt, dass unterhalb des winkelabhängigen Filters 42 eine Detektorplatte 49 angeordnet ist, die eine Reihe von Detektoröffnungen 41 aufweist, die jeweils zentral unterhalb der Emissionsöffnungen 27 und der Kavitäten 80 angeordnet sind. In jeder dieser Detektoröffnungen 41 ist eine Detektoreinheit mit jeweils wenigstens einem Detektor 40 angeordnet, die durch die Perspektive in Fig. 7 verdeckt sind. Bei den Detektoren 40 handelt es sich beispielsweise um Photodioden mit Empfindlichkeiten in unterschiedlichen Wellenlängenbereichen. Um das Emissionslicht bzw. die Lichtsignale auf die Detektoren 40 zu fokussieren, sind in den Öffnungen jeweils Kugellinsen 43 angeordnet.

In einer Gesamtbetrachtung der Fig. 3, 5 und 7 verlaufen die Transmissionsstrahlengänge jeweils ausgehend von dem Lichtmischer 24 durch einen Lichtleiter 26, eine Emissionsöffnung 27, den Zwischenraum 6 bzw. eine Kavität 80, den winkelabhängigen Filter 42 zu einem Detektor 40 bzw. einer Detektoreinheit. Nach dem Austritt aus den Emissionsöffnungen 27 verlaufen die Transmissionsstrahlengänge parallel zueinander.

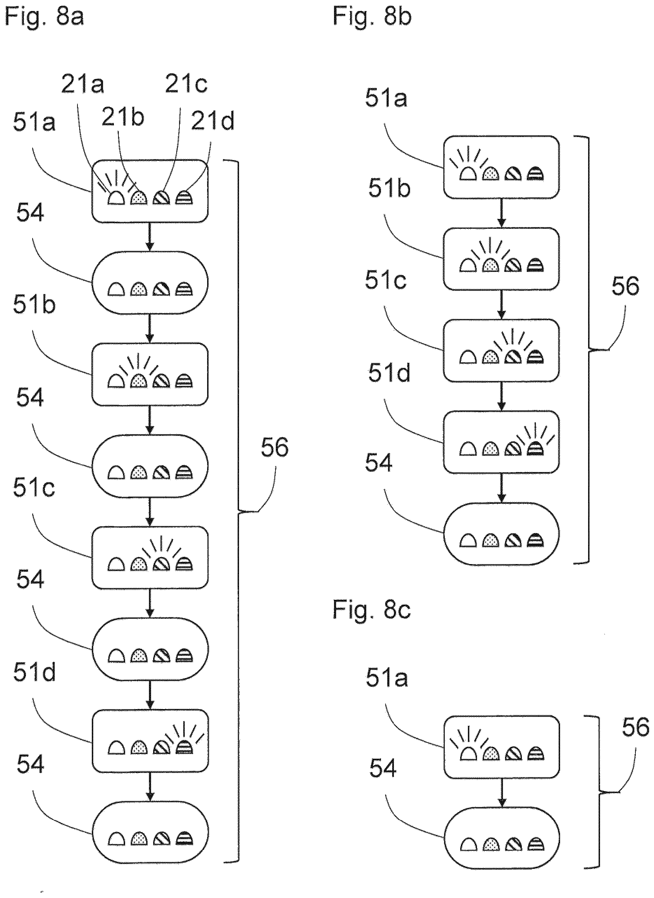

In den Fig. 8a bis 8c sind verschiedene alternative Messzyklen 56 dargestellt, die bei der Untersuchung der Proben durchlaufen werden. Diese Messzyklen 56 umfassen jeweils eine Anzahl Lichtmessungen 51a, 51b, 51c, 51d und eine Anzahl Dunkelmessungen 54.

Bei einer Lichtmessung 51a, 51b, 51c, 51d leuchtet jeweils eine der Leuchtdioden 21a, 21b, 21c, 21d für einen ersten Zeitraum, beispielsweise 5 ms. Bei einer Dunkelmessung leuchtet für einen zweiten Zeitraum, beispielsweise ebenfalls 5 ms, keine der Leuchtdioden 21a bis 21d. Die Mikrotiterplatte 8 ist während des gesamten Messzyklus 56 in dem Zwischenraum 6 angeordnet. Bei der Untersuchung der Proben werden die Messzyklen 56 jeweils vielfach wiederholt, um sowohl Messungen mit einer hohen Signalstärke zu erhalten als auch hochfrequente Störungen herausfiltern zu können.

Bei dem in Fig. 8a gezeigten Messzyklus wird nach jeder Lichtmessung 51a bis 51d eine Dunkelmessung 54 gemessen, wobei bei den Lichtmessungen sequentiell die unterschiedlichen Leuchtdioden 21a bis 21d das Emissionslicht bereitstellen. Demgegenüber umfasst der in Fig. 8b gezeigte Messzyklus 56 die vier Lichtmessungen 51a bis 51d und nur eine Dunkelmessung 54, die von allen Lichtmessungen 51a bis 51d subtrahiert wird. Der in Fig. 8c gezeigte Messzyklus 56 umfasst nur eine Lichtmessung 51a und eine Dunkelmessung 54. Dieser Messzyklus ist beispielsweise sinnvoll, wenn die Proben nur mit einer Wellenlänge untersucht werden müssen oder die Untersuchung mit anderen Wellenlängen durchgeführt werden sollen, nachdem die Untersuchung nach einer vielfachen Wiederholung des Messzyklus 56 mit der ersten Wellenlänge abgeschlossen ist.

Die Dunkelmessung 54 wird bei allen in den Fig. 8a bis 8c gezeigten Messzyklen 56 von den von derselben Detektoreinheit gemessenen Lichtmessungen 51a bis 51d subtrahiert, so dass für jede Detektoreinheit separat eine Hintergrundintensität bestimmt wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 1: Transmissionsvorrichtung
- 2: Beleuchtungseinrichtung
- 3: Statusleuchte
- 4: Detektionseinrichtung
- 6: Zwischenraum
- 8: Mikrotiterplatte
- 20: Emissionsquelle
- 21a, 21b, 21c, 21d: Leuchtdiode
- 22: Interferenzfilter
- 23: Kugellinse
- 24: Lichtmischer
- 25: Teilstrahlengänge
- 26: Lichtleiter
- 27: Emissionsöffnung
- 28: Halteplatte
- 29: Auswurfvorrichtung
- 30: Referenzstrahlengang
- 32: Referenzdetektor
- 40: Detektor
- 41: Detektoröffnung
- 42: winkelabhängiger Filter
- 43: Kugellinse
- 49: Detektorplatte
- 51a, 51b, 51c, 51d: Lichtmessung
- 54: Dunkelmessung
- 56: Messzyklus
- 80: Kavität

## Patentansprüche

1. Transmissionsvorrichtung (1) zur Untersuchung von Proben in Kavitäten (80) einer Mikrotiterplatte (8), umfassend eine Beleuchtungseinrichtung (2) und eine Detektionseinrichtung (4), zwischen denen ein Zwischenraum (6) ausgebildet ist, der dazu eingerichtet ist, eine Mikrotiterplatte (8) aufzunehmen, wobei die Beleuchtungseinrichtung (2) wenigstens eine Emissionsquelle (20) aufweist, die zur Erzeugung von Emissionslicht ausgebildet ist, wobei die Beleuchtungseinrichtung (2) dazu eingerichtet ist, das von der Emissionsquelle (20) erzeugte Emissionslicht auf mehrere Teilstrahlengänge (25) aufzuteilen, wobei mehrere der Teilstrahlengänge (25) als Transmissionsstrahlengänge durch den Zwischenraum (6) zu jeweils einer Detektoreinheit der Detektionseinrichtung (4) verlaufen und wobei die Detektionseinrichtung (4) dazu ausgebildet ist, entlang der Transmissionsstrahlengänge einfallende Lichtsignale mittels der Detektoreinheiten für jeden Transmissionsstrahlengang separat zu messen, **dadurch gekennzeichnet, dass** die Beleuchtungseinrichtung (2) einen Lichtmischer (24) umfasst, der dazu ausgebildet ist, das von der Emissionsquelle (20) erzeugte Emissionslicht zu homogenisieren und mit gleichmäßiger Intensität auf die Teilstrahlengänge (25) zu verteilen, wobei die Teilstrahlengänge (25) in der Beleuchtungseinrichtung (2) in jeweils einem Lichtleiter (26) verlaufen, die mit ihren Eintrittsseiten gebündelt an dem Lichtmischer (24) anliegen, wobei die Lichtleiter (24), in denen die Transmissionsstrahlengänge verlaufen, dazu eingerichtet sind, einen Anteil des Emissionslichts von dem Lichtmischer (24) zu jeweils einer Emissionsöffnung (27) der Beleuchtungseinrichtung (2) zu leiten, wobei der Lichtmischer (24) eine im wesentliche dreieckige Form aufweist, wobei eine Seite des Dreiecks zur Einkopplung des Emissionslichts vorgesehen ist und die zwei anderen Seiten in Ausbreitungsrichtung des Lichts zusammenlaufen.

2. Transmissionsvorrichtung (1) nach Anspruch 1, **dadurch gekennzeichnet, dass** die Detektionseinrichtung (4) dazu ausgebildet ist, die Lichtsignale für jeden Transmissionsstrahlengang simultan zu messen.

3. Transmissionsvorrichtung (1) nach Anspruch 1 oder 2, **dadurch gekennzeichnet, dass** die Beleuchtungseinrichtung (2) dazu eingerichtet ist, das von der Emissionsquelle (20) erzeugte Emissionslicht auf wenigstens sechsundneunzig Teilstrahlengänge (25) aufzuteilen, wobei sechsundneunzig der Teilstrahlengänge (25) als Transmissionsstrahlengänge vorgesehen sind und wobei die Detektionseinrichtung (4) sechsundneunzig Detektoreinheiten umfasst.

4. Transmissionsvorrichtung (1) nach einem der Ansprüche 1 bis 3, **dadurch gekennzeichnet, dass** wenigstens einer der Teilstrahlengänge (25) ein Referenzstrahlengang (30) ist, der dazu eingerichtet ist, das Emissionslicht zu einer Referenzdetektoreinheit (32), die in der Beleuchtungseinrichtung (2) angeordnet ist, zu leiten.

5. Transmissionsvorrichtung (1) nach einem der Ansprüche 1 bis 4, **dadurch gekennzeichnet, dass** der Zwischenraum (6) als rechteckförmige Öffnung in der Transmissionsvorrichtung (1) ausgebildet ist, so dass die Transmissionsvorrichtung (1) als offener Messaufbau ausgestaltet und die in den Zwischenraum (6) einbringbare oder befindliche Mikrotiterplatte (8) ohne die Notwendigkeit der Betätigung eines Verschlusselements zugänglich ist.

6. Transmissionsvorrichtung (1) nach einem der Ansprüche 1 bis 5, **dadurch gekennzeichnet, dass** der Zwischenraum (6) im Wesentlichen formkomplementär zu der in den Zwischenraum (6) einbringbaren oder befindlichen Mikrotiterplatte (8) ist.

7. Transmissionsvorrichtung (1) nach einem der Ansprüche 1 bis 6, **dadurch gekennzeichnet, dass** der Lichtmischer (24) einen rechteckigen Querschnitt aufweist, wobei insbesondere die Emissionsöffnungen (27) als Aussparungen in einer Halteplatte (28) ausgebildet sind, wobei insbesondere in den Emissionsöffnungen (27) Kugellinsen angeordnet sind.

8. Transmissionsvorrichtung (1) nach einem der Ansprüche 1 bis 7, **dadurch gekennzeichnet, dass** die Emissionsquelle (20) wenigstens zwei, insbesondere wenigstens drei, insbesondere wenigstens vier Leuchtdioden (21a, 21b, 21c, 21d) umfasst, wobei das Emissionslicht der Leuchtdioden (21a, 21b, 21c, 21d) im Lichtmischer (24) zusammengeführt wird, wobei zwischen wenigstens einer der Leuchtdioden (21a, 21b, 21c, 21d) und dem Lichtmischer (24) ein Interferenzfilter (22) angeordnet ist, wobei insbesondere eine Kugellinse (23) vor und insbesondere eine weitere Kugellinse hinter dem Interferenzfilter (22) angeordnet sind, wobei insbesondere eine erste Leuchtdiode (21a) zur Emission von Emissionslicht mit einer Wellenlänge von 405 nm, eine zweite Leuchtdiode (21b) zur Emission von Emissionslicht mit einer Wellenlänge von 450 nm, eine dritte Leuchtdiode (21c) zur Emission von Emissionslicht mit einer Wellenlänge von 540 nm und eine vierte Leuchtdiode (21d) zur Emission von Emissionslicht mit einer Wellenlänge von 630 nm eingerichtet ist.

9. Verfahren zum Untersuchen von Proben in Kavitäten (80) einer Mikrotiterplatte (8) mittels Transmission, wobei die Mikrotiterplatte (8) in einem Zwischenraum (6) zwischen einer Beleuchtungseinrichtung (2) und einer Detektionseinrichtung (4) angeordnet wird, wobei Emissionslicht während eines ersten Zeitraums in der Beleuchtungseinrichtung (2) mittels einer Emissionsquelle (20) erzeugt wird, wobei das Emissionslicht in der Beleuchtungseinrichtung (2) auf mehrere Teilstrahlengänge (25) aufgeteilt wird, wobei mehrere der Teilstrahlengänge (25) als Transmissionsstrahlengänge durch jeweils eine Kavität (80) der Mikrotiterplatte (8) zu jeweils einer Detektoreinheit der Detektionseinrichtung (4) verlaufen und wobei während des ersten Zeitraums entlang der Transmissionsstrahlengänge einfallende Lichtsignale mittels der Detektoreinheiten für jeden Transmissionsstrahlengang separat gemessen werden, **dadurch gekennzeichnet, dass** die Beleuchtungseinrichtung (2) einen Lichtmischer (24) umfasst, der das von der Emissionsquelle (20) erzeugte Emissionslicht homogenisiert und mit gleichmäßiger Intensität auf die Teilstrahlengänge (25) verteilt, wobei die Teilstrahlengänge (25) in der Beleuchtungseinrichtung (2) in jeweils einem Lichtleiter (26) verlaufen, die mit ihren Eintrittsseiten gebündelt an dem Lichtmischer (24) anliegen, wobei die Lichtleiter (24), in denen die Transmissionsstrahlengänge verlaufen, einen Anteil des Emissionslichts von dem Lichtmischer (24) zu jeweils einer Emissionsöffnung (27) der Beleuchtungseinrichtung (2) leiten, wobei der Lichtmischer (24) eine im wesentliche dreieckige Form aufweist, wobei eine Seite des Dreiecks zur Einkopplung des Emissionslichts vorgesehen ist und die zwei anderen Seiten in Ausbreitungsrichtung des Lichts zusammenlaufen.

10. Verfahren nach Anspruch 9, **dadurch gekennzeichnet, dass** durch jede Kavität (80) der Mikrotiterplatte (8) ein Transmissionsstrahlengang verläuft, wobei die Lichtsignale für jeden Transmissionsstrahlengang simultan gemessen werden.

11. Verfahren nach Anspruch 9 oder 10, **dadurch gekennzeichnet, dass** das Emissionslicht in der Beleuchtungseinrichtung (2) auf wenigstens sechsundneunzig Teilstrahlengänge (25) aufgeteilt wird, wobei sechsundneunzig der Teilstrahlengänge (25) als Transmissionsstrahlengänge vorgesehen sind und wobei während des ersten Zeitraums entlang der Transmissionsstrahlengänge einfallende Lichtsignale mittels sechsundneunzig Detektoreinheiten für jeden Transmissionsstrahlengang separat gemessen werden.

12. Verfahren nach einem der Ansprüche 9 bis 11, **dadurch gekennzeichnet, dass** eine Alterung der Emissionsquelle (20) und/oder eine Veränderung der Wellenlängen der Intensität des Emissionslichts der Emissionsquelle (20) mittels einer Referenzmessung gemessen wird, wobei das Emissionslicht über einen Referenzstrahlengang (30) zu einer Referenzdetektoreinheit (32) geleitet wird, die in der Beleuchtungseinrichtung (2) angeordnet ist und die Intensität des Emissionslichts erfasst, wobei die Intensität des Emissionslichts mit zuvor gemessenen und/oder vorgegebenen Werten für die Intensität des Emissionslichts verglichen wird.

13. Verfahren nach einem der Ansprüche 9 bis 12, **dadurch gekennzeichnet, dass** die Untersuchung der Proben mit einem offenen Messaufbau durchgeführt wird.

14. Verfahren nach einem der Ansprüche 9 bis 13, **dadurch gekennzeichnet, dass** die während des ersten Zeitraums gemessenen Lichtsignale eine Lichtmessung (51a, 51b, 51c, 51d) darstellen, wobei während eines zweiten Zeitraums kein Emissionslicht durch die Kavitäten geleitet wird und die während des zweiten Zeitraums gemessenen Lichtsignale eine Dunkelmessung (54) darstellen, wobei für jede Detektoreinheit separat jeweils eine Lichtmessung und jeweils eine Dunkelmessung durchgeführt wird, wobei für jede Detektoreinheit die Dunkelmessung (54) von der Lichtmessung (51a, 51b, 51c, 51d) subtrahiert wird, wobei insbesondere mehrere Messzyklen (56) durchlaufen werden, wobei in jedem Messzyklus (56) wenigstens eine Lichtmessung (51a, 51b, 51c, 51d) und wenigstens eine Dunkelmessung (54) gemessen werden und von jeder in einem Messzyklus (56) gemessenen Lichtmessung (51a, 51b, 51c, 51d) eine im selben Messzyklus (56) von derselben Detektoreinheit gemessene Dunkelmessung (54) subtrahiert wird.

15. Verfahren nach einem der Ansprüche 9 bis 14, **dadurch gekennzeichnet, dass** Emissionslicht mit wenigstens zwei, insbesondere wenigstens drei, insbesondere wenigstens vier unterschiedlichen Wellenlängen mittels jeweils einer Leuchtdiode (21a, 21b, 21c, 21d) der Emissionsquelle (20) erzeugt wird, wobei die Bandbreite des Emissionslichts jeder Leuchtdiode (21a, 21b, 21c, 21d) mittels jeweils einem Interferenzfilter (22) beschränkt wird, wobei insbesondere eine erste Leuchtdiode (21a) Emissionslicht mit einer Wellenlänge von 405 nm, eine zweite Leuchtdiode (21b) Emissionslicht mit einer Wellenlänge von 450 nm, eine dritte Leuchtdiode (21c) Emissionslicht mit einer Wellenlänge von 540 nm und eine vierte Leuchtdiode (21d) Emissionslicht mit einer Wellenlänge von 630 nm emittiert, wobei insbesondere die Untersuchung der Proben für jede Wellenlänge sequentiell erfolgt.

## Claims

1. A transmission device (1) for examining samples in cavities (80) of a microtiter plate (8), comprising an illumination device (2) and a detection device (4), between which an intermediate space (6) is formed which is designed to receive a microtiter plate (8), wherein the illumination device (2) comprises at least one emission source (20), which is designed to generate emission light, wherein the illumination device (2) is designed to split the emission light generated by the emission source (20) onto a plurality of partial beam paths (25), wherein several of the partial beam paths (25) extend as transmission beam paths through the intermediate space (6) to one detector unit of the detection device (4) in each case and wherein the detection device (4) is being designed to measure light signals incident along the transmission beam paths separately for each transmission beam path by means of the detector units, **characterized in that** the illumination device (2) comprises a light mixer (24), which is designed to homogenize the emission light generated by the emission source (20) and to distribute the emission light with equal intensity onto the partial beam paths (25), wherein the partial beam paths (25) in the illumination device (2) each extend in an optical waveguide (26), the entry sides of which adjoin the light mixer (24) so as to be bundled together, wherein the optical waveguides (26) in which the transmission beam paths extend are designed to guide a portion of the emission light from the light mixer (24) to one emission opening (27) of the illumination device (2) in each case, wherein the light mixer (24) has a substantially triangular shape, wherein one side of the triangle is provided for coupling in the emission light und the two other sides converge in the direction of propagation of the light.

2. The transmission device (1) according to claim 1, **characterized in that** the detection device (4) is designed to measure light signals for each transmission beam path simultaneously.

3. The transmission device (1) according to claim 1 or 2, **characterized in that** the illumination device (2) is designed to split the emission light generated by the emission source (20) onto at least ninety-six partial beam paths (25), ninety-six of the partial beam paths (25) being provided as transmission beam paths and the detection device (4) comprising ninety-six detector units.

4. The transmission device (1) according to any one of claims 1 to 3, **characterized in that** at least one of the partial beam paths (25) is a reference beam path (30), which is provided for guiding the emission light to a reference detector unit (32), which is arranged in the illumination device (2).

5. The transmission device (1) according to any one of claims 1 to 4, **characterized in that** the intermediate space (6) is formed as a rectangular opening in the transmission device (1), such that the transmission device (1) is designed as an open measuring assembly and the microtiter plate (8) that can be inserted or is located in the intermediate space (6) can be accessed without the need to actuate a closure element.

6. The transmission device (1) according to any one of claims 1 to 5, **characterized in that** the intermediate space (6) substantially matches the shape of the microtiter plate (8) that can be inserted or that is located in the intermediate space (6).

7. The transmission device (1) according to any one of claims 1 to 6, **characterized in that** the light mixer (24) has a rectangular cross-section, wherein in particular the emission openings (27) are formed as cut-outs in a holding plate (28), wherein in particular spherical lenses are arranged in the emission openings (27).

8. The transmission device (1) according to any one of claims 1 to 7, **characterized in that** the emission source (20) comprises at least two, in particular at least three, in particular at least four light-emitting diodes (21a, 21b, 21c, 21d), wherein the emission light from the light-emitting diodes (21a, 21b, 21c, 21d) is being gathered in the light mixer (24), wherein an interference filter (22) is being arranged between at least one of the light-emitting diodes (21a, 21b, 21c, 21d) and the light mixer (24), wherein a spherical lens (23) is in particular arranged in front of and an additional spherical lens is in particular arranged behind the interference filter (22), wherein in particular a first light-emitting diode (21a) is designed to emit emission light with a wavelength of 405 nm, a second light-emitting diode (21b) is designed to emit emission light with a wavelength of 450 nm, a third light-emitting diode (21c) is designed to emit emission light with a wavelength of 540 nm and a fourth light-emitting diode (21d) is designed to emit emission light with a wavelength of 630 nm.

9. A method for examining samples in cavities (80) of a microtiter plate (8) by means of transmission, wherein the microtiter plate (8) is arranged in an intermediate space (6) between an illumination device (2) and a detection device (4), wherein emission light is generated during a first period of time in the illumination device (2) by means of an emission source (20), wherein, in the illumination device (2), the emission light is split onto a plurality of partial beam paths (25), wherein several of the partial beam paths (25) extend as transmission beam paths through one cavity (80) of the microtiter plate (8) in each case and to one detector unit of the detection device (4) in each case and wherein light signals incident along the transmission beam paths are measured separately for each transmission beam path by means of the detector units during the first period of time, **characterized in that** the illumination device (2) comprises a light mixer (24), which homogenizes the emission light generated by the emission source (20) and distributes the emission light with equal intensity onto the partial beam paths (25), wherein the partial beam paths (25) in the illumination device (2) each extend in an optical waveguide (26), the entry sides of which adjoin the light mixer (24) so as to be bundled together, wherein the optical waveguides (26) in which the transmission beam paths extend guide a portion of the emission light from the light mixer (24) to one emission opening (27) of the illumination device (2) in each case, wherein the light mixer (24) has a substantially triangular shape, wherein one side of the triangle is provided for coupling in the emission light und the two other sides converge in the direction of propagation of the light.

10. The method according to claim 9, **characterized in that** a transmission beam path extends through each cavity (80) of the microtiter plate (8), the light signals being measured simultaneously for each transmission beam path.

11. The method according to claim 9 or 10, **characterized in that**, in the illumination device (2), the emission light is split onto at least ninety-six partial beam paths (25), wherein ninety-six of the partial beam paths (25) are provided as transmission beam paths and wherein light signals incident along the transmission beam paths are measured separately for each transmission beam path by means of ninety-six detector units during the first period of time.

12. The method according to any one of claims 9 to 11, **characterized in that** an aging of the emission source (20) and/or a change in the wavelengths of the intensity of the emission light from the emission source (20) is measured by means of a reference measurement, wherein the emission light is guided along a reference beam path (30) to a reference detector unit (32), which is arranged in the illumination device (2) and detects the intensity of the emission light, wherein the intensity of the emission light is compared with previously measured and/or predefined values for the intensity of the emission light.

13. The method according to one of claims 9 to 12, **characterized in that** the examination of the samples is carried out using an open measuring assembly.

14. The method according to any one of claims 9 to 13, **characterized in that** the light signals measured during the first period of time constitute a light measurement (51a, 51b, 51c, 51d), wherein no emission light is guided through the cavities during a second period of time and the light signals measured during the second period of time constitute a dark measurement (54), wherein one light measurement and one dark measurement are being carried out separately for each detector unit, the dark measurement (54) being subtracted from the light measurement (51a, 51b, 51c, 51d) for each detector unit.

15. The method according to any one of claims 9 to 14, **characterized in that** emission light is generated with at least two, in particular at least three, in particular at least four, different wavelengths by one light-emitting diode (21a, 21b, 21c, 21d) of the emission source (20) in each case, wherein the bandwidth of the emission light of each light-emitting diode (21a, 21b, 21c, 21d) is limited by means of one interference filter (22) in each case, wherein in particular a first light-emitting diode (21a) emits emission light with a wavelength of 405 nm, a second light-emitting diode (21b) emits emission light with a wavelength of 450 nm, a third light-emitting diode (21c) emits emission light with a wavelength of 540 nm and a fourth light-emitting diode (21d) emits emission light with a wavelength of 630 nm.

## Revendications

1. Dispositif de transmission (1) pour l'examen d'échantillons dans des cavités (80) d'une plaque de microtitrage (8), comprenant un dispositif d'éclairage (2) et un dispositif de détection (4), entre lesquels est formé un espace intermédiaire (6) qui est conçu pour recevoir une plaque de microtitrage (8), le dispositif d'éclairage (2) présentant au moins une source d'émission (20) qui est conçue pour générer de la lumière d'émission, le dispositif d'éclairage (2) étant conçu de façon à répartir la lumière d'émission générée par la source d'émission (20) sur plusieurs trajets de faisceaux partiels (25), plusieurs des trajets de faisceaux partiels (25) s'étendant en tant que trajets de faisceaux de transmission à travers l'espace intermédiaire (6) vers une unité de détection respective du dispositif de détection (4), et le dispositif de détection (4) étant conçu de façon à mesurer séparément des signaux lumineux incidents le long des trajets de faisceaux de transmission au moyen des unités de détection pour chaque trajet de faisceaux de transmission, **caractérisé en ce que**
le dispositif d'éclairage (2) comprend un mélangeur de lumière (24) qui est conçu de façon à homogénéiser la lumière d'émission générée par la source d'émission (20) et pour la répartir avec une intensité uniforme sur les trajets de faisceaux partiels (25), les trajets de faisceaux partiels (25) s'étendant dans le dispositif d'éclairage (2) dans un guide de lumière (26) respectif qui s'applique avec ses côtés d'entrée en faisceau sur le mélangeur de lumière (24), les guides de lumière (24), dans lesquels s'étendent les trajets des faisceaux de transmission, étant conçus de façon à guider une partie de la lumière d'émission depuis le mélangeur de lumière (24) vers une ouverture d'émission (27) respective du dispositif d'éclairage (2), le mélangeur de lumière (24) présentant une forme essentiellement triangulaire, un côté du triangle étant prévu pour le couplage de la lumière d'émission et les deux autres côtés convergeant dans la direction de propagation de la lumière.

2. Dispositif de transmission (1) selon la revendication 1, **caractérisé en ce que** le dispositif de détection (4) est conçu pour mesurer simultanément les signaux lumineux pour chaque trajet de faisceau de transmission.

3. Dispositif de transmission (1) selon la revendication 1 ou la revendication 2, **caractérisé en ce que** le dispositif d'éclairage (2) est agencé de façon à répartir la lumière d'émission générée par la source d'émission (20) sur au moins quatre-vingt-seize trajets de faisceau partiels (25), quatre-vingt-seize des trajets de faisceau partiels (25) étant prévus en tant que trajets de faisceau de transmission et le dispositif de détection (4) comprenant quatre-vingt-seize unités de détection.

4. Dispositif de transmission (1) selon l'une des revendications 1 à 3, **caractérisé en ce qu'**au moins l'un des trajets de faisceaux partiels (25) est un trajet de faisceaux de référence (30) adapté pour guider la lumière d'émission vers une unité de détection (32) de référence disposée dans le dispositif d'éclairage (2).

5. Dispositif de transmission (1) selon l'une des revendications 1 à 4, **caractérisé en ce que** l'espace intermédiaire (6) est conçu sous la forme d'une ouverture rectangulaire dans le dispositif de transmission (1), de sorte que le dispositif de transmission (1) est conçu sous la forme d'une structure de mesure ouverte et que la plaque de microtitrage (8), apte à être introduite dans l'espace intermédiaire (6) ou se trouvant dans celui-ci, est accessible sans qu'il soit nécessaire d'actionner un élément d'obturation.

6. Dispositif de transmission (1) selon l'une des revendications 1 à 5, **caractérisé en ce que** l'espace intermédiaire (6) est de forme sensiblement complémentaire à la plaque de microtitrage (8) apte à être introduite dans l'espace intermédiaire (6) ou se trouvant dans celui-ci.

7. Dispositif de transmission (1) selon l'une des revendications 1 à 6, **caractérisé en ce que** le mélangeur de lumière (24) présente une section transversale rectangulaire, les ouvertures d'émission (27) étant notamment réalisées sous forme d'évidements dans une plaque de maintien (28), des lentilles sphériques étant notamment disposées dans les ouvertures d'émission (27).

8. Dispositif de transmission (1) selon l'une des revendications 1 à 7, **caractérisé en ce que** la source d'émission (20) comprend au moins deux, en particulier au moins trois, en particulier au moins quatre diodes électroluminescentes (21a, 21b, 21c, 21d), la lumière d'émission des diodes électroluminescentes (21a, 21b, 21c, 21d) étant réunie dans le mélangeur de lumière (24), un filtre interférentiel (22) étant disposé entre au moins une des diodes électroluminescentes (21a, 21b, 21c, 21d) et le mélangeur de lumière (24), une lentille sphérique (23) étant notamment disposée devant le filtre interférentiel (22) et une autre lentille sphérique étant notamment disposée derrière le filtre interférentiel (22), une première diode électroluminescente (21a) étant notamment destinée à émettre une lumière d'émission ayant une longueur d'onde de 405 nm, une deuxième diode électroluminescente (21b) étant conçue pour émettre une lumière d'émission d'une longueur d'onde de 450 nm, une troisième diode électroluminescente (21c) étant conçue pour émettre une lumière d'émission d'une longueur d'onde de 540 nm et une quatrième diode électroluminescente (21d) étant conçue pour émettre une lumière d'émission d'une longueur d'onde de 630 nm.

9. Procédé d'examen d'échantillons dans des cavités (80) d'une plaque de microtitrage (8) par transmission, la plaque de microtitrage (8) étant disposée dans un espace intermédiaire (6) entre un dispositif d'éclairage (2) et un dispositif de détection (4), la lumière d'émission étant générée pendant une première période dans le dispositif d'éclairage (2) au moyen d'une source d'émission (20), la lumière d'émission étant répartie dans le dispositif d'éclairage (2) en plusieurs trajets de faisceaux partiels (25), plusieurs des trajets de faisceaux partiels (25) s'étendant en tant que trajets de faisceaux de transmission à travers une cavité (80) respective de la plaque de microtitrage (8) vers une unité de détection respective du dispositif de détection (4), et des signaux lumineux incidents pendant la première période le long des trajets de faisceaux de transmission étant mesurés séparément au moyen des unités de détection pour chaque trajet de faisceaux de transmission, **caractérisé en ce que**
le dispositif d'éclairage (2) comprend un mélangeur de lumière (24) qui homogénéise la lumière d'émission générée par la source d'émission (20) et qui la répartit avec une intensité uniforme sur les trajets de faisceaux partiels (25), les trajets de faisceaux partiels (25) dans le dispositif d'éclairage (2) s'étendent chacun dans un guide de lumière (26) qui s'applique avec ses côtés d'entrée en faisceau sur le mélangeur de lumière (24), les guides de lumière (24), dans lesquels s'étendent les trajets de faisceaux de transmission, conduisant une partie de la lumière d'émission depuis le mélangeur de lumière (24) vers une ouverture d'émission (27) respective du dispositif d'éclairage (2), le mélangeur de lumière (24) présentant une forme essentiellement triangulaire, un côté du triangle étant prévu pour le couplage de la lumière d'émission et les deux autres côtés convergeant dans la direction de propagation de la lumière.

10. Procédé selon la revendication 9, **caractérisé en ce que** chaque cavité (80) de la plaque de microtitrage (8) est traversée par un trajet de faisceau de transmission, les signaux lumineux étant mesurés simultanément pour chaque trajet de faisceau de transmission.

11. Procédé selon la revendication 9 ou la revendication 10, **caractérisé en ce que** la lumière d'émission dans le dispositif d'éclairage (2) est répartie sur au moins quatre-vingt-seize trajets de faisceaux partiels (25), quatre-vingt-seize des trajets de faisceaux partiels (25) étant prévus en tant que trajets de faisceaux de transmission, et les signaux lumineux incidents pendant la première période le long des trajets de faisceaux de transmission étant mesurés séparément pour chaque trajet de faisceaux de transmission, au moyen de quatre-vingt-seize unités de détection.

12. Procédé selon l'une des revendications 9 à 11, **caractérisé en ce qu'**un vieillissement de la source d'émission (20) et/ou une modification des longueurs d'onde de l'intensité de la lumière d'émission de la source d'émission (20) sont mesurés au moyen d'une mesure de référence, la lumière d'émission étant guidée par un trajet de faisceau de référence (30) vers une unité de détection (32) de référence qui est disposée dans le dispositif d'éclairage (2) et qui détecte l'intensité de la lumière d'émission, l'intensité de la lumière d'émission étant comparée à des valeurs préalablement mesurées et/ou prédéfinies pour l'intensité de la lumière émise.

13. Procédé selon l'une des revendications 9 à 12, **caractérisé en ce que** l'examen des échantillons est effectué au moyen d'un dispositif de mesure ouvert.

14. Procédé selon l'une des revendications 9 à 13, **caractérisé en ce que** les signaux lumineux mesurés pendant la première période représentent une mesure de lumière (51a, 51b, 51c, 51d), aucune lumière d'émission n'étant transmise à travers les cavités pendant une deuxième période et les signaux lumineux mesurés pendant la deuxième période représentant une mesure d'obscurité (54), une mesure de lumière et une mesure d'obscurité étant respectivement effectuées séparément pour chaque unité de détection, la mesure d'obscurité (54) étant soustraite de la mesure de lumière (51a, 51b, 51c, 51d) pour chaque unité de détection, plusieurs cycles de mesure (56) étant notamment effectués, au moins une mesure de lumière (51a, 51b, 51c, 51d) étant effectuée dans chaque cycle de mesure (56), 51d) et au moins une mesure d'obscurité (54) sont mesurées et une mesure d'obscurité (54) mesurée dans le même cycle de mesure (56) par la même unité de détection est soustraite de chaque mesure de lumière (51a, 51b, 51c, 51d) mesurée dans un cycle de mesure (56).

15. Procédé selon l'une des revendications 9 à 14, **caractérisé en ce que** la lumière d'émission est produite avec au moins deux, en particulier au moins trois, en particulier au moins quatre longueurs d'onde différentes au moyen d'une diode électroluminescente (21a, 21b, 21c, 21d) respective de la source d'émission (20), la largeur de bande de la lumière d'émission de chaque diode électroluminescente (21a, 21b, 21c, 21d) étant limitée au moyen d'un filtre interférentiel (22) respectif, notamment une première diode électroluminescente (21a) émettant une lumière d'émission d'une longueur d'onde de 405 nm, une deuxième diode électroluminescente (21b) émettant une lumière d'émission d'une longueur d'onde de 450 nm, une troisième diode électroluminescente (21c) émettant une lumière d'émission d'une longueur d'onde de 540 nm et une quatrième diode électroluminescente (21d) émettant une lumière d'émission d'une longueur d'onde de 630 nm, l'examen des échantillons pour chaque longueur d'onde étant en particulier effectué de manière séquentielle.
